Europäisches Patentamt

European Patent Office

Office européen des brevets

(19)

(11) Numéro de publication : **0 211 785 B1**

(12) **FASCICULE DE BREVET EUROPEEN**

(45) Date de publication du fascicule du brevet :
20.03.91 Bulletin 91/12

(51) Int. Cl.⁵ : **A01D 34/64**

(21) Numéro de dépôt : **86440057.7**

(22) Date de dépôt : **08.07.86**

(54) Faucheuse.

Demande divisionnaire 90114649.8 déposée le 08/07/86.

(30) Priorité : **18.07.85 FR 8511137**

(43) Date de publication de la demande :
**25.02.87 Bulletin 87/09**

(45) Mention de la délivrance du brevet :
**20.03.91 Bulletin 91/12**

(84) Etats contractants désignés :
**DE GB IT NL**

(56) Documents cités :
**DE-A- 1 582 356**
**DE-A- 2 400 894**

(56) Documents cités :
**DE-A- 2 722 883**
**DE-B- 1 135 233**
**FR-A- 1 499 066**
**FR-A- 2 110 911**
**FR-A- 2 118 738**
**FR-A- 2 241 230**
**FR-A- 2 357 163**
**GB-A- 1 155 819**
**US-A- 2 732 675**
**US-A- 4 183 195**

(73) Titulaire : **KUHN S.A.**
**4, Impasse des Fabriques**
**F-67700 Saverne (FR)**

(72) Inventeur : **Ermacora, Rino**
**5, Rue de Monswiller**
**Ottersthal F-67700 Saverne (FR)**

EP 0 211 785 B1

## Description

La présente invention concerne une faucheuse telle que décrite dans le préambule de la revendication 1.

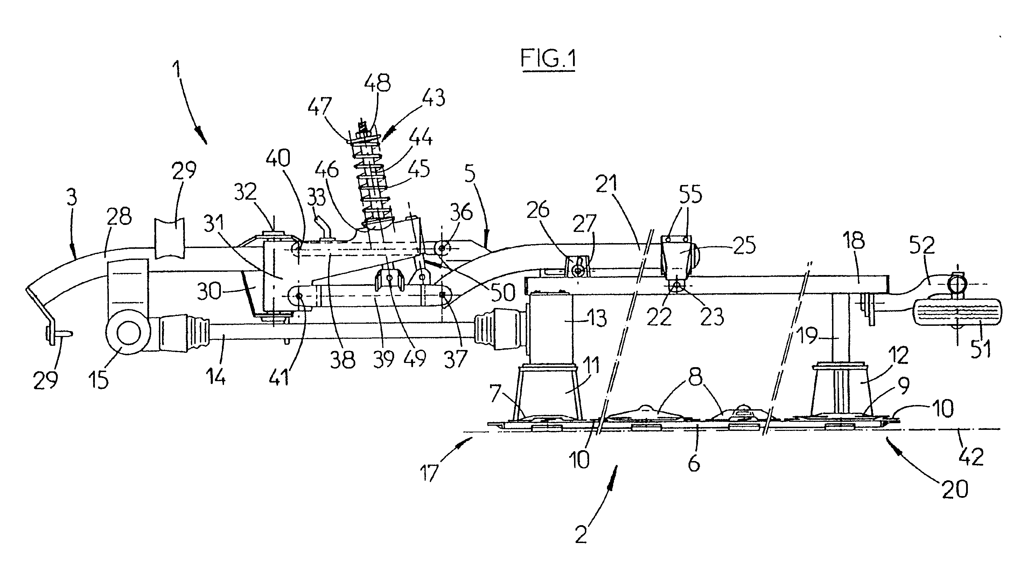

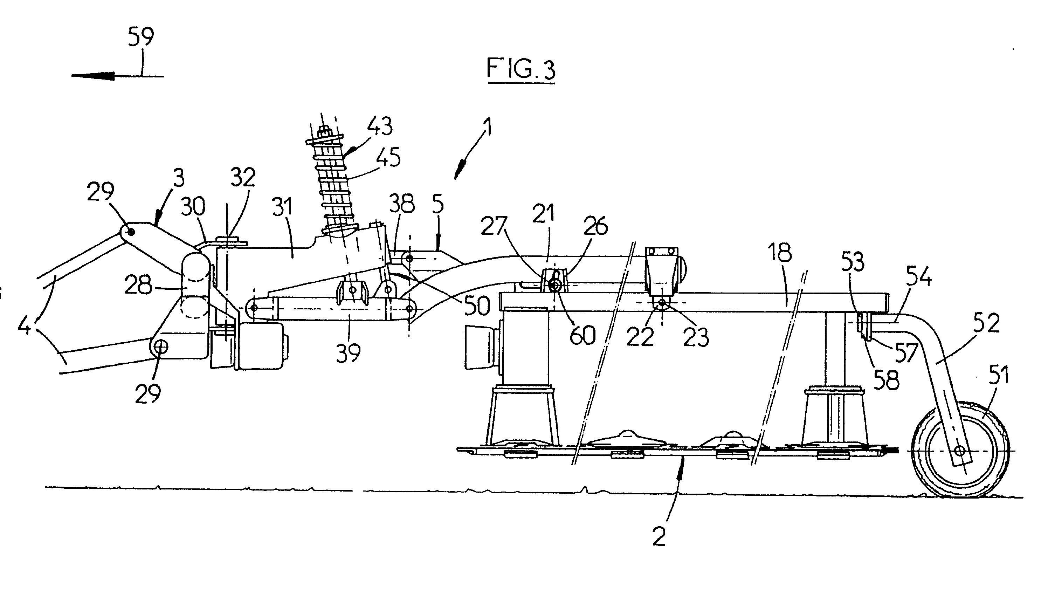

La DE-A-1 582 356 décrit une telle faucheuse comportant un groupe de fauche lié à un dispositif d'attelage au moyen d'un dispositif de liaison. Le groupe de fauche comporte quatre organes de coupe en forme de tambour, qui sont agencés côte à côte transversalement à la direction de travail et qui sont guidés en rotation dans une poutre support s'étendant au-dessus desdits organes de coupe. Dans sa partie médiane, sensiblement dans le voisinage du plan vertical passant par le centre de masse du groupe de fauche, la poutre support est munie d'une chape entre les deux ailes de laquelle s'étend l'extrémité libre d'une poutre de liaison qui y est liée au moyen d'une articulation d'axe dirigé suivant la direction de travail. A son autre extrémité, la poutre de liaison est liée au dispositif d'attelage au moyen d'une articulation d'axe également dirigé suivant la direction de travail. La poutre de liaison comporte en fait deux bras liés l'un à l'autre au moyen d'une articulation d'axe dirigé sensiblement verticalement, de telle sorte qu'au transport, le groupe de fauche puisse être, conjointement avec le bras extérieur, pivoté d'environ 90° vers l'arrière. Entre la partie supérieure du dispositif d'attelage et le bras intérieur s'étendent, en sus, un tirant et un ressort de traction. Le tirant est lié au bras intérieur au moyen d'une articulation d'axe dirigé suivant la direction de travail et au dispositif d'attelage, au moyen d'une articulation d'axe également dirigé suivant la direction de travail, mais susceptible de glisser dans un trou oblong. La fonction de ce tirant est de limiter vers le bas le pivotement de la poutre de liaison lors du relevage de la faucheuse. La fonction du ressort de traction, par contre, consiste à créer, au niveau de l'articulation par l'intermédiaire de laquelle la poutre de liaison est liée au groupe de fauche, une force de délestage dirigée vers le haut. Dans cette faucheuse connue, la poutre de liaison s'étend à une certaine distance au-dessus de la poutre support du groupe de fauche. Cette faucheuse connue présente l'inconvénient d'avoir un pouvoir d'adaptation insuffisant aux configurations présentées par le sol. En effet, si au cours du travail, le groupe de fauche s'étend plus haut que la position normale telle que représentée sur les figures 1 et 3, la poutre de liaison se rapproche de l'extrémité de la poutre support du groupe de fauche la plus proche du dispositif d'attelage. Dans ce cas, comme ladite poutre support s'étend en-dessous de ladite poutre de liaison, il apparaît que le pivotement possible du groupe de fauche autour de l'articulation par l'intermédiaire de laquelle il est lié à l'extrémité libre de la poutre de liaison, est substantiellement réduit.

Le but de la présente invention est de remédier aux inconvénients de cette faucheuse de l'art antérieur.

A cet effet, dans la faucheuse selon la présente invention, le dispositif de liaison qui lie le groupe de fauche au dispositif d'attelage comporte, en sus, deux barres de liaison qui sont chacune liées, d'une part, à l'extrémité de ladite poutre de liaison la plus proche du dispositif d'attelage et, d'autre part, au dispositif d'attelage au moyen d'articulations d'axes respectifs au moins sensiblement dirigés dans la direction de travail de manière à former avec le dispositif d'attelage et la poutre de liaison au moins sensiblement un parallélogramme déformable quand le groupe de fauche est dans une position apte à travailler sur terrain sensiblement horizontal et que l'organe élastiquement déformable du mécanisme de délestage agit au moins entre deux côtés dudit parallélogramme déformable.

Grâce à cet agencement, la poutre de liaison se déplace en restant au moins sensiblement parallèle à elle-même. De cette sorte, l'angle de pivotement possible du groupe de fauche autour de l'articulation par l'intermédiaire de laquelle il est lié à l'extrémité libre de la poutre de liaison, dans un sens et dans l'autre, reste conservé dans n'importe quelle position de la poutre de liaison.

Dans la FR-A-2.241.230 est décrite une faucheuse comportant un groupe de fauche lié à un dispositif d'attelage au moyen d'un dispositif de liaison. Le groupe de fauche comporte un seul organe de coupe en forme de tambour comportant, à sa partie supérieure, un renvoi d'angle. Ce renvoi d'angle comporte deux portées cylindriques définissant une première articulation d'axe dirigé suivant la direction de travail. A cette première articulation sont liées les deux barres inférieures du dispositif de liaison. A leur autre extrémité, ces deux barres inférieures sont liées au dispositif d'attelage au moyen d'une seconde articulation d'axe dirigé également suivant la direction de travail. A la première articulation est également liée une barre qui s'étend vers le haut. A son extrémité supérieure, cette barre est liée au moyen d'une troisième articulation d'axe également dirigé suivant la direction de travail, à l'une des extrémités d'une barre supérieure qui s'étend parallèlement auxdites barres inférieures. A son autre extrémité, la barre supérieure est liée au dispositif d'attelage au moyen d'une quatrième articulation d'axe également dirigé suivant la direction de travail. Le dispositif de liaison ainsi constitué forme un parallélogramme déformable. Les barres inférieures sont prolongées au-delà de la seconde articulation par l'intermédiaire de laquelle elles sont liées au dispositif d'attelage par une partie possédant, en vue en plan, une forme triangulaire. Entre l'extrémité de cette partie, éloignée de la seconde articulation et le dispositif d'attelage est agencé un ressort de traction qui permet de réduire la force avec laquelle l'organe de coupe repose sur le sol à l'aide d'un sabot. Cette faucheuse connue ne comporte pas plusieurs organes de coupe agencés côte à côte transversalement à la direction de travail. En sus, elle ne comporte pas non plus de poutre de liaison à l'extrémité libre de laquelle est lié le groupe de fauche au moyen d'une articulation d'axe sensiblement dirigé dans la direction de travail et qui est liée à l'autre de ses extrémités à deux barres de liaison d'un parallélogramme déformable au moyen d'articulations d'axes respectifs sensiblement dirigés suivant la direction de travail.

Selon une caractéristique supplémentaire de l'invention, l'organe élastiquement déformable s'étend entre le dispositif d'attelage et l'un au moins des trois autres côtés du parallélogramme déformable.

Une construction relativement simple est obtenue lorsque l'organe élastiquement déformable est lié à l'une au moins des barres de liaison.

Il est par ailleurs très avantageux du point de vue de la construction que l'organe élastiquement déformable soit lié à la barre de liaison inférieure.

Lorsque les deux barres de liaison sont, en position normale, sensiblement horizontales, l'endroit de la poutre de liaison où est accroché le groupe de fauche peut varier sans que cela ait une influence sensible sur la force de rappel à développer par l'organe élastiquement déformable. Ceci est important, car il est en général intéressant de pouvoir déplacer le point d'accrochage du groupe de fauche pour adapter la position dudit groupe de fauche à la voie du véhicule tracteur auquel est attelée la faucheuse. Lors de cette adaptation de la position du groupe de fauche à la voie du véhicule tracteur, la force de rappel à développer par l'organe élastiquement déformable reste donc sensiblement constante.

Selon un premier mode de construction, il est possible dans le cadre de l'invention, d'agencer l'organe élastiquement déformable de telle sorte que la direction de la force de rappel qu'il exerce sur la barre de liaison à laquelle il est lié, s'étende sensiblement parallèlement à ladite barre de liaison. Dans ce cas, l'organe élastiquement déformable peut, en partie au moins, s'étendre à l'intérieur de l'espace occupé par le dispositif d'attelage. Dans cet agencement, il est avantageux que le point d'application de l'effort de rappel exercé par l'organe élastiquement déformable sur la barre de liaison, soit choisi de telle sorte que ledit effort de rappel n'introduise pas d'effort néfaste dans ladite barre de liaison. Dans le cas de la barre de liaison inférieure par exemple, ce point d'application sera situé sensiblement dans le voisinage du plan vertical passant par le point d'articulation de la barre de liaison inférieure au dispositif d'attelage.

Selon un deuxième mode de construction, il est possible, dans le cadre de l'invention, d'agencer l'organe élastiquement déformable de telle sorte que la direction de la force de rappel qu'il exerce sur la barre de liaison à laquelle il est lié, s'étende vers le haut.

Avantageusement, cette direction est sensiblement perpendiculaire à la barre de liaison sur laquelle s'exerce l'effort de rappel.

L'effort de rappel à exercer par l'organe élastiquement déformable sur la barre de liaison sera d'autant plus petit que le point d'application de cet effort sur la barre de liaison s'étend dans le voisinage du plan vertical passant par le point d'articulation de ladite barre de liaison à la poutre de liaison.

Lorsque les deux barres de liaison sont sensiblement horizontales, que le point d'application de l'effort de rappel exercé par l'organe élastiquement déformable sur la barre de liaison à laquelle il est lié, est sensiblement situé dans le plan vertical passant par le point d'articulation de la dite barre de liaison à la poutre de liaison et que la direction de l'effort de rappel s'étend sensiblement perpendiculairement à ladite barre de liaison, alors cet effort de rappel est sensiblement égal à la valeur du délestage souhaité.

Dans ce deuxième mode de construction, l'organe élastiquement déformable peut s'étendre dans la direction suivant laquelle il exerce la force de rappel sur la barre de liaison à laquelle il est lié. Mais il peut également s'étendre sensiblement horizontalement et de ce fait être situé, en partie au moins, à l'intérieur de l'espace occupé par le dispositif d'attelage. Dans ce dernier cas, l'organe élastiquement déformable peut exercer la force de rappel sur la barre de liaison à laquelle il est lié, par l'intermédiaire d'au moins un organe de traction pliable qui s'enroule, au moins partiellement, sur un guide lié au dispositif d'attelage, pour qu'au niveau de la barre de liaison cet effort de rappel soit dirigé vers le haut.

Ce guide s'étend préférentiellement au droit du point d'articulation de ladite barre de liaison à la poutre de liaison.

Afin d'éviter que le groupe de fauche ne sautille sur le terrain pendant le travail, l'invention prévoit, suivant une caractéristique supplémentaire, d'agencer un dispositif amortisseur qui s'étend entre au moins deux côtés du parallélogramme déformable.

Selon un mode de construction, le dispositif amortisseur s'étend entre le dispositif d'attelage et l'un au moins des trois autres côtés du parallélogramme déformable.

Avantageusement, ce dispositif amortisseur est lié à l'une des barres de liaison et préférentiellement à la barre de liaison inférieure.

Afin que l'action d'amortissement exercée par le dispositif amortisseur soit sensiblement optimale, celui-ci s'étend sensiblement perpendiculairement à la barre de liaison à laquelle il est lié. Avantageusement, son point de liaison sur la barre de liaison s'étend dans le voisinage du plan vertical passant par le point d'articulation de ladite barre de liaison à la poutre de liaison. Une disposition optimale est obtenue lorsque le point de liaison du dispositif amortisseur sur la barre de liaison est situé dans le plan vertical passant par le point d'articulation de ladite barre de liaison à la poutre de liaison.

Dans le but de pouvoir travailler avec le groupe de fauche le long de talus inclinés vers le haut ou vers le bas, l'invention prévoit que l'une des barres de liaison ait une longueur variable.

Préférentiellement, c'est la barre de liaison supérieure qui a une longueur variable.

Selon une construction avantageuse, la barre de liaison qui a une longueur variable, est constituée par un organe extensible et rétractable tel qu'un vérin hydraulique par exemple.

Pour le transport, il est connu de faire pivoter la barre de coupe vers l'arrière par rapport à la position qu'elle occupe au travail. Dans cette position, la barre de coupe s'étend derrière le véhicule tracteur.

Pour réaliser ceci, une construction particulièrement simple est obtenue lorsque le dispositif d'attelage comporte une structure d'attelage et un organe support qui est lié à ladite structure d'attelage au moyen d'un axe dirigé vers le haut, organe support auquel sont liées les barres de liaison, de sorte que l'organe support puisse pivoter conjointement avec les barres de liaison, la poutre de liaison et le groupe de fauche, par rapport à la structure d'attelage autour dudit axe dirigé vers le haut.

Lorsque le groupe de fauche est relativement lourd (groupe de fauche de grande largeur de travail et/ou équipé d'un dispositif de conditionnement du fourrage), il est avantageux de le supporter en partie, au transport, au moyen d'au moins une roue par exemple. Ceci évite aux roues avant du véhicule tracteur d'être trop délestées et de conserver une bonne adhérence au sol.

Dans ce cas, l'agencement qui vient d'être décrit est également très intéressant. En effet, l'organe élastiquement déformable continue de travailler lorsque le groupe de fauche est en position de transport. De cette sorte, la liaison entre la structure d'attelage et le reste de la faucheuse n'est pas rigide. Il n'y a donc pas de risque de déformation ou de casse de divers organes de la faucheuse lorsque par exemple le véhicule tracteur et la ou les roues qui supportent le groupe de fauche, roulent sur une surface inégale.

D'autres caractéristiques et avantages de l'invention sont contenus dans les autres revendications et la description ci-dessous de plusieurs exemples de réalisation non limitatifs de l'invention, faite au regard du dessin annexé sur lequel,

- La figure 1 représente une vue de l'arrière d'une faucheuse selon l'invention en position de travail,
- La figure 2 représente une vue de dessus de la faucheuse en position de travail,
- La figure 3 représente une vue de côté de la faucheuse selon l'invention en position de transport,

- La figure 4 représente une vue de dessus de la faucheuse en position de transport,
- La figure 5 représente, à une échelle agrandie, une vue de devant d'une autre forme de réalisation du parallélogramme de liaison de la faucheuse selon l'invention,
- La figure 6 représente une vue schématique d'une faucheuse selon l'invention équipée du dispositif de liaison de la faucheuse de la figure 5, fauchant un talus incliné vers le haut,
- La figure 7 représente une vue schématique d'une faucheuse selon l'invention équipée du dispositif de liaison de la faucheuse de la figure 5, fauchant un talus incliné vers le bas,
- La figure 8 représente une vue schématique d'un deuxième exemple de réalisation d'un mécanisme de délestage,
- La figure 9 représente une vue schématique d'un troisième exemple de réalisation d'un mécanisme de délestage, et
- La figure 10 représente une vue schématique d'un quatrième exemple de réalisation d'un mécanisme de délestage.

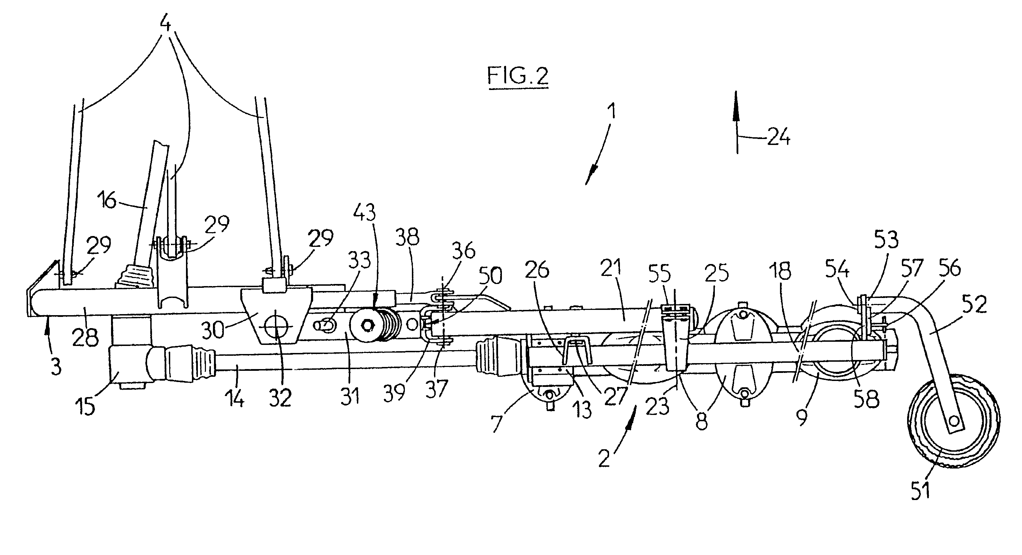

Sur les figures 1 et 2, on voit une faucheuse (1) selon l'invention qui se trouve en position de travail. Celle-ci comporte un groupe de fauche (2), un dispositif d'attelage (3) qui permet d'atteler la faucheuse à un véhicule tracteur (4) (voir figure 2) dont on n'a représenté que partiellement l'attelage, et un dispositif de liaison (5) liant le groupe de fauche (2) au dispositif d'attelage (3).

Le groupe de fauche (2) comporte un carter (6) à la partie supérieure duquel sont guidés en rotation des organes de coupe (7 ; 8 ; 9). Ces organes de coupe (7 ; 8 ; 9) sont munis d'outils de coupe (10). Les organes de coupe extrêmes (7 ; 9) sont surmontés par un tambour rotatif (11 ; 12).

A la partie supérieure du tambour (11) surmontant le premier organe de coupe extrême (7), s'étend un carter d'entrée (13). Ce carter d'entrée (13) contient des éléments d'entraînement qui sont à la portée de l'homme de l'art. Une partie de ces éléments d'entraînement traverse la partie supérieure du tambour (11) et entraîne le premier organe de coupe (7) et le tambour (11), de même que d'autres éléments d'entraînement logés à l'intérieur du carter (6). Ces autres éléments d'entraînement sont également à la portée de l'homme de l'art. Ils servent à l'entraînement en rotation des organes de coupe (8 ; 9) et du tambour (12).

L'entraînement des différents éléments d'entraînement qui viennent d'être décrits, est réalisé par un arbre à joints universels (14) qui s'étend entre le carter d'entrée (13) et un carter de renvoi (15) fixé au dispositif d'attelage (3). Le carter de renvoi (15) reçoit, quant-à-lui, le mouvement à partir de la prise de force du véhicule tracteur (4) auquel est attelée la faucheuse (1), par l'intermédiaire d'un arbre à joints universels (16) (voir figure 2).

Le carter d'entrée (13) sert également à lier l'extrémité gauche (17) du carter (6) à l'une des extrémités d'une poutre support (18). A l'autre extrémité, la poutre support (18) est munie d'une jambe (19) qui s'étend vers le bas et pénètre à l'intérieur du tambour (12) par la partie supérieure de celui-ci. La jambe (19) sert à lier l'extrémité droite (20) du carter (6) à la poutre support (18).

Sensiblement à la verticale du centre de gravité du groupe de fauche (2), la poutre support (18) est liée à l'extrémité d'une poutre de liaison (21) au moyen d'une articulation (22) d'axe (23) sensiblement dirigé dans la direction du travail (24) (voir figure 2). A cet effet, la poutre de liaison (21) est munie d'une chape (25). Cette chape (25) est fixée sur la poutre de liaison (21) à l'aide de moyens de fixation (55) qui autorisent le déplacement de la chape (25) et du groupe de fauche (2) le long de l'axe longitudinal de la poutre de liaison (21). On peut ainsi adapter la position du groupe de fauche (2) à la voie du véhicule tracteur (4) auquel est attelée la faucheuse. Le pivotement du groupe de fauche (2) autour de l'articulation (22, 23) est limité dans les deux sens par un secteur de limitation (26) solidaire de la poutre support (18), qui collabore avec un index (27) solidaire de la poutre de liaison (21). Cet index (27) peut être déplacé suivant l'axe longitudinal de la poutre de liaison (21) lors de l'adaptation du groupe de fauche (2) à la voie du véhicule tracteur (4).

Le dispositif d'attelage (3) est constitué par une structure d'attelage (28) comportant trois points d'attelage (29) qui servent à la liaison de la structure d'attelage (28) à l'attelage arrière à trois points du véhicule tracteur (4).

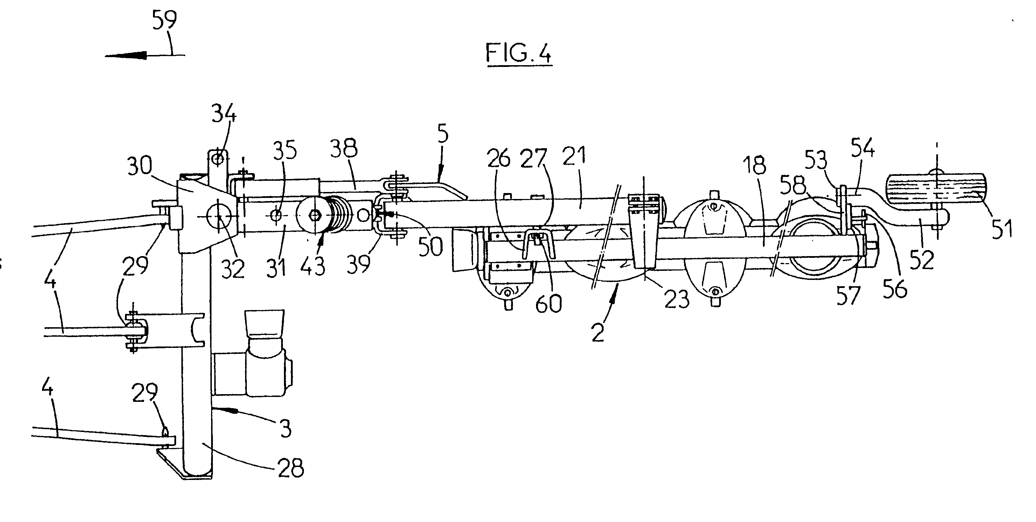

A son extrémité proche du groupe de fauche (2), la structure d'attelage (28) comporte une chape (30). Dans cette chape (30) est articulé un organe support (31) qui peut pivoter par rapport à la structure d'attelage (28) autour d'un axe de pivotement (32) dirigé vers le haut. Le pivotement de l'organe support (31) qui fait partie du dispositif d'attelage (3), par rapport à la structure d'attelage (28), est condamné lorsque le groupe de fauche (2) est en position de travail (position représentée sur les figures 1 et 2). Cette condamnation du pivotement de l'organe support (31), par rapport à la structure d'attelage (28), est réalisée par un verrou (33) qui agit entre la structure d'attelage (28) et l'organe support (31). A cet effet, la structure d'attelage (28) et l'organe support (31) possèdent chacun un trou de verrouillage (34 ; 35) (voir figure 4).

A son extrémité éloignée de la chape (25), c'est-à-dire la plus proche du dispositif d'attelage (3), la poutre de liaison (21) est liée au moyen d'articulations (36 ; 37) d'axe sensiblement dirigé dans la direction de travail (24), à deux barres de liaison (38 ; 39) sensiblement horizontales.

A leur autre extrémité, les barres de liaison (38 ; 39) sont liées à l'organe support (31) au moyen d'articulations (40 ; 41) d'axe également sensiblement dirigé dans la direction de travail (24).

L'ensemble organe support (31) – barres de liaison (38 ; 39) – poutre de liaison (21) forme ainsi un parallélogramme de liaison déformable. La poutre de liaison (21) se déplace ainsi en restant sensiblement parallèle à sa position qui est représentée. De cette sorte, l'angle de pivotement possible du groupe de fauche (2), dans un sens et dans l'autre, reste conservé même si le groupe de fauche (2) travaille dans un plan horizontal différent du plan horizontal (42) sur lequel il repose sur la figure 1.

Entre la barre de liaison inférieure (39) et l'organe support (31) est agencé un mécanisme de délestage (43). Ce mécanisme de délestage (43) a pu être aménagé car, comme visible sur la figure 2, la barre de liaison supérieure (38) s'étend plus en avant, compte tenu du sens de travail (24), que la barre de liaison inférieure (39) et que l'organe support (31). Ce mécanisme de délestage (43) comporte une tige (44) filetée à son extrémité supérieure, et un organe élastiquement déformable (45). Cet organe (45) est, dans l'exemple représenté, un ressort mécanique de compression.

La tige (44) traverse l'organe élastiquement déformable (45) qui est maintenu entre une rondelle demi-circulaire (46) reposant dans un logement approprié de l'organe support (31), et une rondelle (47) maintenue par un écrou (48) vissé sur l'extrémité filetée de la tige (44).

A son autre extrémité, la tige (44) est liée de manière articulée à la barre de liaison (39) qui comporte à cet effet une chape (49). Cette chape (49) se trouve le plus près possible de l'articulation (37) qui lie la barre de liaison (39) à la poutre de liaison (21).

Par ailleurs, on voit que le mécanisme de délestage (43) exerce sur la barre de liaison (39) une force dirigée vers le haut, sensiblement perpendiculairement à ladite barre de liaison (39). L'effort de compression supplémentaire introduit dans la barre de liaison (39) par le mécanisme de délestage (43) est ainsi relativement faible.

Grâce à cet agencement, l'organe élastiquement déformable tend à tirer la barre de liaison (39) vers le haut. Cette action tend également à tirer la barre de liaison (38) de même que la poutre de liaison (21) vers le haut. Ceci a pour conséquence de créer, au niveau de l'articulation (22, 23), une force dirigée vers le haut qui agit en sens inverse du poids du groupe de fauche (2). Ce groupe de fauche (2) ne repose alors sur le sol qu'avec un poids apparent plus faible que son poids propre.

Grâce à l'écrou (48), la force de rappel créée par l'organe élastiquement déformable (45) (donc la force de délestage) peut être réglée selon les conditions dans lesquelles la faucheuse doit travailler.

Entre la barre de liaison inférieure (39) et l'organe support (31) s'étend également un dispositif amortisseur (50) qui est lié respectivement à ces deux éléments au moyen d'une articulation. Ce dispositif amortisseur (50) s'étend très près de l'articulation (37) qui lie la barre de liaison (39) à la poutre de liaison (21). Par ailleurs, le dispositif amortisseur (50) crée une action d'amortissement dirigée sensiblement perpendiculairement à la barre de liaison (39). Le dispositif amortisseur (50) empêche le groupe de fauche (2) de sautiller sur le sol sur lequel il opère. Ceci améliore le travail réalisé par le groupe de fauche (2).

Sur la figure 1, on voit encore qu'à l'extrémité droite de la poutre support (18), est agencée une roue (51). Cette roue (51) est liée à un bras de suspension (52). Ce bras de suspension (52) est lui-même lié à la poutre support (18) au moyen d'une articulation (53) d'axe (54) dirigé transversalement à la direction d'avance (24). Dans les figures 1 et 2, la roue (51) se trouve en position de travail. Dans cette position, elle est éloignée du sol de sorte à ne pas gêner le fauchage réalisé par les organes de coupe (7 ; 8 ; 9). Sur la figure 2, on voit que la roue (51) est maintenue dans cette position par un verrou (56) qui traverse successivement un trou aménagé dans une plaque (57) solidaire du bras de suspension (52) et un trou aménagé dans une plaque (58) solidaire de la poutre support (18).

La poutre (57) solidaire du bras de suspension (52) possède un autre trou dans lequel sera engagé le verrou (56) lorsque la roue (51) se trouvera en position de transport. C'est ce qui est représenté sur les figures 3 et 4.

Dans cette position, la roue (51) est en contact avec le sol. Elle est maintenue dans cette position par le verrou (56) qui traverse maintenant successivement le deuxième trou aménagé dans la plaque (57) solidaire du bras de suspension (52) et le trou aménagé dans la plaque (58) solidaire de la poutre support (18). Dans cette position, la roue (51) tourne sensiblement dans un plan vertical parallèle à la direction de transport (59).

Par ailleurs, on voit que la structure d'attelage (28) a été pivotée par rapport au reste des organes de la faucheuse autour de l'axe de pivotement (32). Dans cette position, le pivotement entre la structure d'attelage (28) et le reste des organes de la faucheuse (1) est possible et la position desdits organes derrière le véhicule tracteur (4) est définie par la roue (51). La machine se comporte ainsi comme une remorque et dans les virages, il y a un pivotement possible entre la structure d'attelage (28) et le reste des organes de la faucheuse autour de l'axe de pivotement (32).

Dans la position de transport, on a verrouillé le pivotement du groupe de fauche (2) par rapport à la poutre de liaison (21). Pour ce faire, un écrou (60) a été vissé sur le bout de l'index (27).

Sur la figure 3, on voit que le mécanisme de délestage (43) est également opérationnel au transport. Il existe donc entre la roue (51), le groupe de fauche (2), le dispositif de liaison (5), et le dispositif d'attelage (3), une liaison élastique. Si un dispositif amortisseur (50) est aménagé, le pivotement possible autour de cette liaison est également amorti. Le transport de la faucheuse se trouve ainsi plus aisé.

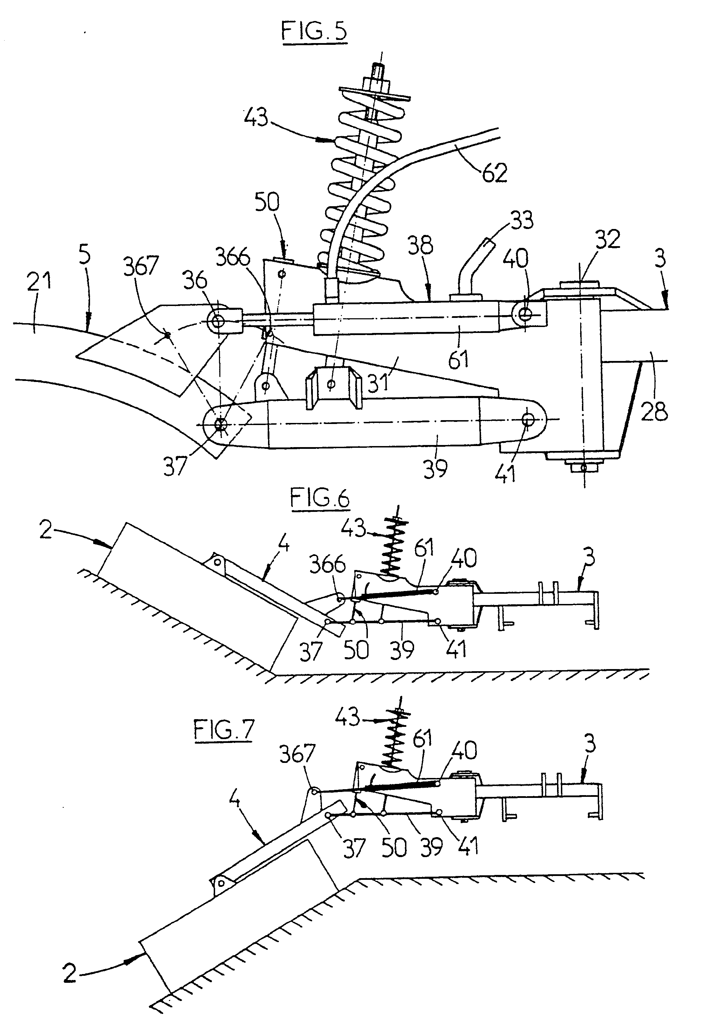

Sur la figure 5, on voit que la barre de liaison supérieure (38) est constituée par un organe rétractable et extensible. La longueur de cette barre de liaison (38) est ainsi variable. Elle peut être réglée en fonction de travaux de fauchage très spéciaux à réaliser. Cet organe rétractable et extensible est dans l'exemple un vérin hydraulique (61) qui est alimenté par une conduite hydraulique (62) branchée, par exemple, sur le circuit hydraulique du véhicule tracteur (4).

En injectant du fluide dans le vérin (61), sa longueur se raccourcit. L'articulation (36) qui lie le vérin (61) à la poutre de liaison (21), est ainsi amenée dans une position (366). Ceci a pour effet de faire tourner le groupe de fauche (2) autour de l'articulation (37) qui lie la barre de liaison inférieure (39) à la poutre de liaison (21). Le groupe de fauche (2) prend alors une position inclinée vers le haut, tel que cela a été représenté sur la figure 6. Il est ainsi possible de faucher des talus inclinés vers le haut.

En relâchant le fluide du vérin (61), le poids du groupe de fauche (2) fera tourner ce dernier autour de l'articulation (37) qui lie la barre de liaison inférieure (39) à la poutre de liaison (21). Ceci a pour effet d'allonger la longueur du vérin (61) jusqu'à ce que le groupe de fauche (2) repose sur le sol. L'articulation (36) qui lie le vérin (61) à la poutre de liaison (21) peut ainsi être amenée dans une position (367), ce qui confère au groupe de fauche (2) une position inclinée vers le bas, tel que cela a été représenté sur la figure 7. Il est ainsi possible de faucher des talus inclinés vers le bas.

On comprendra que le raccourcissement ou l'allongement du vérin (61) dépendent de l'inclinaison du talus vers le haut ou vers le bas.

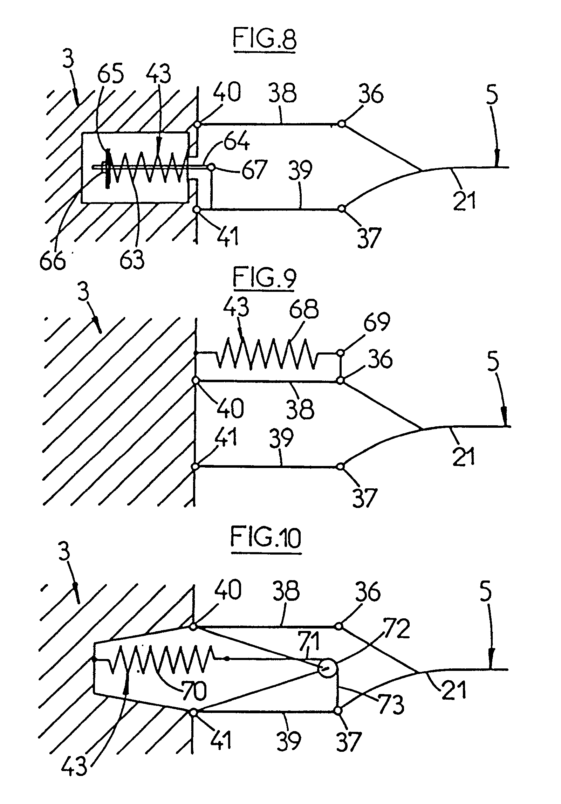

Les figures 8 à 10 montrent schématiquement divers autres exemples de réalisation de l'invention.

Sur ces diverses figures, on voit schématiquement le dispositif d'attelage (3), les barres de liaison (38 ; 39) et la poutre de liaison (21) du dispositif de liaison (5).

Sur la figure 8, le mécanisme de délestage (43) comporte un ressort de compression (63). Ce ressort de compression (63) est logé à l'intérieur du dispositif d'attelage (3). Il est traversé par une tige (64) et est comprimé entre le dispositif d'attelage (3) et une rondelle (65) maintenue par un écrou (66) vissé sur l'extrémité de la tige (64) qui s'étend à l'intérieur du dispositif d'attelage (3).

L'autre extrémité de la tige (64) est liée au moyen d'une articulation (67) à la barre de liaison inférieure (39). L'articulation (67) est situé dans le voisinage du plan vertical passant par l'articulation (41) qui lie la barre de liaison inférieure (39) au dispositif d'attelage (3) et plus haut que ladite articulation (41). L'effort de rappel exercé par le ressort (63) sur la barre de liaison (39) ne crée donc pas de compression supplémentaire dans ladite barre de liaison (39).

Sur la figure 9, le mécanisme de délestage (43) comporte un ressort de traction (68). Ce ressort (68) est lié à l'une de ses extrémités au dispositif d'attelage (3). A l'autre extrémité, le ressort (68) est lié à la barre de liaison supérieure (38) au moyen d'une articulation (69). L'articulation (69) est contenue dans le plan vertical passant par l'articulation (36) qui lie la barre de liaison supérieure (38) à la poutre de liaison (21), et est située plus haut que l'articulation (36).

Le poids du groupe de fauche (2) introduit dans la barre de liaison supérieure (38) un effort de traction. Le ressort (68) par contre introduit dans ladite barre de liaison supérieure (38) un effort de compression qui se retranche à l'effort de traction engendré par le poids du groupe de fauche (2). L'agencement tel que décrit, permet donc également de soulager la barre de liaison supérieure (38).

Sur la figure 10, le mécanisme de délestage (43) comporte également un ressort de traction (70). Ce ressort de traction (70) s'étend partiellement à l'intérieur de l'espace occupé par le dispositif d'attelage (3). A l'une de ses extrémités, le ressort de traction (70) est lié au dispositif d'attelage (3), tandis qu'à son autre extrémité, il est lié à l'une des extrémités d'un organe de traction pliable (71), tel qu'un câble par exemple. L'organe de traction pliable (71) s'enroule partiellement sur un guide (72), tel qu'une roue par exemple, qui est lié au dispositif d'attelage (3). A l'autre extrémité, l'organe de traction pliable (71) est lié à l'articulation (37) qui lie la barre de liaison inférieure (39) à la poutre de liaison (21). Le brin (73) de l'organe de traction pliable (71) qui s'étend entre le guide (72) et l'articulation (37), s'étend dans le plan vertical passant par l'articulation (37).

Etant donné que le ressort (70) exerce son effort de rappel sur l'articulation (37), et comme les barres de liaison (38 ; 39) sont horizontales, cet effort de rappel est sensiblement égal à l'effort de délestage souhaité au niveau du groupe de fauche (2).

Par ailleurs, comme l'effort de rappel exercé par le ressort (70) est sensiblement dirigé verticalement à la barre de liaison (39), il n'introduit pas d'effort de compression supplémentaire dans la barre de liaison inférieure (39).

Dans l'invention, il sera possible de faire toutes les combinaisons possibles entre les différents exemples de réalisation qui viennent d'être décrits.

Par ailleurs, on ne sortira pas non plus du cadre de l'invention tel que défini dans les revendications en apportant des modifications ou des améliorations aux divers exemples décrits.

## Revendications

1. Faucheuse (1) comportant un groupe de fauche (2) et un dispositif d'attelage (3) à un véhicule tracteur (4), ledit groupe de fauche (2) comportant plusieurs organes de coupe (7, 8, 9) agencés côte à côte transversalement à la direction de travail (24), ledit groupe de fauche (2) étant par ailleurs lié audit dispositif d'attelage (3) au moyen d'un dispositif de liaison (5) comprenant une poutre de liaison (21) à laquelle est lié le groupe de fauche (2) au moyen d'une articulation (22) d'axe (23) au moins sensiblement dirigé dans la direction de travail (24) et s'étendant sensiblement dans le voisinage du plan vertical passant par le centre de masse dudit groupe de fauche (2), ladite faucheuse (1) comprenant par ailleurs un mécanisme de délestage (43) du groupe de fauche (2) muni d'un organe élastiquement déformable (45 ; 63 ; 68 ; 70) créant au niveau de la liaison (22 ; 23 ; 25 ; 55) entre la poutre de liaison (21) et le groupe de fauche (2), un effort dirigé vers le haut, caractérisée par le fait que le dispositif de liaison (5) qui lie le groupe de fauche (2) au dispositif d'attelage (3), comporte en sus, deux barres de liaison (38 ; 39) qui sont chacune liées, d'une part à l'extrémité de ladite poutre de liaison (21) la plus proche du dispositif d'attelage (3) et, d'autre part, au dispositif d'attelage (3), au moyen d'articulations (36 ; 37 ; 40 ; 41) d'axes respectifs au moins sensiblement dirigés dans la direction de travail (24) de manière à former avec le dispositif d'attelage (3) et la poutre de liaison (21) au moins sensiblement un parallélogramme déformable quand le groupe de fauche est dans une position apte à travailler sur terrain sensiblement horizontal, et que l'organe élastiquement déformable (45 ; 63 ; 68 ; 70) du mécanisme de délestage (43) agit au moins entre deux côtés (21 ; 31 ; 38 ; 39) dudit parallélogramme déformable.

2. Faucheuse selon la revendication 1, caractérisée par le fait que l'organe élastiquement déformable (45 ; 63 ; 68 ; 70) s'étend entre le dispositif d'attelage (3) et l'un au moins des trois autres côtés (21 ; 38 ; 39) du parallélogramme déformable.

3. Faucheuse selon la revendication 1 ou 2, caractérisée par le fait que l'organe élastiquement déformable (45 ; 63 ; 68 ; 70) est lié à l'une au moins des barres de liaison (38 ; 39).

4. Faucheuse selon la revendication 3, caractérisée par le fait que l'organe élastiquement déformable (45 ; 63 ; 70) est lié à la barre de liaison inférieure (39).

5. Faucheuse selon l'une des revendications 3 ou 4, caractérisée par le fait que les barres de liaison (38 ; 39) sont en position normale sensiblement horizontales.

6. Faucheuse selon la revendication 3, 4 ou 5, caractérisée par le fait que la direction de la force de rappel exercée par l'organe élastiquement déformable (63 ; 68) sur la barre de liaison (38 ; 39) à laquelle il est lié, s'étend sensiblement parallèlement à ladite barre de liaison (38 ; 39).

7. Faucheuse selon la revendication 6, caractérisée par le fait que le point d'application (67 ; 69) de la force de rappel exercée par l'organe élastiquement déformable (63 ; 68) sur la barre de liaison (39 ; 38) à laquelle il est lié, s'étend sur la barre de liaison (39; 38) à un endroit tel qu'il n'introduise pas d'effort néfaste dans ladite barre de liaison (39 ; 38).

8. Faucheuse selon la revendication 7, caractérisée par le fait que l'organe élastiquement déformable (63) est lié à la barre de liaison inférieure (39), et que le point d'application (67) de la force de rappel s'étend sensiblement dans le voisinage du plan vertical passant par le point d'articulation (41) de la barre de liaison (39) au dispositif d'attelage (3).

9. Faucheuse selon la revendication 3, 4 ou 5, caractérisée par le fait que la direction de la force de rappel exercée par l'organe élastiquement déformable (45 ; 70) sur la barre de liaison (39) à laquelle il est lié, s'étend vers le haut.

10. Faucheuse selon la revendication 9, caractérisée par le fait que la direction de la force de rappel exercée par l'organe élastiquement déformable (45 ; 70) sur la barre de liaison (39) à laquelle il est lié, s'étend sensiblement perpendiculairement à ladite barre de liaison (39).

11. Faucheuse selon l'une des revendications 9 ou 10, caractérisée par le fait que le point de liaison de l'organe élastiquement déformable (45 ; 70) sur la barre de liaison (39) à laquelle il est lié, s'étend dans le voisinage du plan vertical passant par le point d'articulation (37) de ladite barre de liaison (39) à la poutre de liaison (21).

12. Faucheuse selon la revendication 11, caractérisée par le fait que le point de liaison de l'organe élastiquement déformable (70) sur la barre de liaison (39) s'étend dans le plan vertical passant par le point d'articulation (37) de ladite barre de liaison (39) à la poutre de liaison (21).

13. Faucheuse selon l'une au moins des revendications 9, 10, 11 ou 12, caractérisée par le fait que l'organe élastiquement déformable (70) exerce une force de rappel sur la barre de liaison (39) à laquelle il est lié, par l'intermédiaire d'au moins un organe de traction pliable (71) qui s'enroule, au moins partiellement, sur un guide (72) lié au dispositif d'attelage (3).

14. Faucheuse selon la revendication 13, caractérisée par le fait que le guide (72) est une roue.

15. Faucheuse selon l'une des revendications 6, 13 ou 14, caractérisée par le fait que l'organe élastiquement déformable (63 ; 68 ; 70) s'étend sensiblement horizontalement.

16. Faucheuse selon la revendication 15, caractérisée par le fait que l'organe élastiquement déformable (63 ; 70) est logé au moins partiellement à l'intérieur de l'espace occupé par le dispositif d'attelage (3).

17. Faucheuse selon l'une au moins des revendications précédentes, caractérisée par le fait qu'un dispositif amortisseur (50) s'étend au moins entre deux côtés du parallélogramme déformable (3 ; 38 ; 39 ; 21).

18. Faucheuse selon la revendication 17, caractérisée par le fait que le dispositif amortisseur (50) s'étend entre le dispositif d'attelage (3) et l'un au moins des trois autres côtés du parallélogramme déformable.

19. Faucheuse selon la revendication 18, caractérisée par le fait que le dispositif amortisseur (50) est lié à l'une des barres de liaison (38 ; 39).

20. Faucheuse selon la revendication 19, caractérisée par le fait que le dispositif amortisseur (50) est lié à la barre de liaison inférieure (39).

21. Faucheuse selon la revendication 19 ou 20, caractérisée par le fait que le dispositif amortisseur (50) s'étend sensiblement perpendiculairement à la barre de liaison (38 ; 39) à laquelle il est lié.

22. Faucheuse selon la revendication 21, caractérisée par le fait que le point de liaison du dispositif amortisseur (50) sur la barre de liaison (39) à laquelle il est lié, s'étend dans le voisinage du plan vertical passant par le point d'articulation (37) de ladite barre de liaison (39) à la poutre de liaison (21).

23. Faucheuse selon la revendication 22, caractérisée par le fait que le point de liaison du dispositif amortisseur (50) sur la barre de liaison (39) s'étend dans le plan vertical passant par le point d'articulation (37) de ladite barre de liaison (39) à la poutre de liaison (21).

24. Faucheuse selon l'une au moins des revendications précédentes, caractérisée par le fait que l'une (38) des barres de liaison (38 ; 39) a une longueur variable.

25. Faucheuse selon la revendication 24, caractérisée par le fait que la longueur de la barre de liaison supérieure (38) est variable.

26. Faucheuse selon la revendication 24 ou 25, caractérisée par le fait que la barre de liaison (38) qui a une longueur variable, est constituée par un organe extensible et rétractable tel qu'un vérin hydraulique (61) par exemple.

27. Faucheuse selon l'une au moins des revendications précédentes, caractérisée par le fait que le dispositif d'attelage (3) comporte une structure d'attelage (28) et un organe support (31) qui est lié à ladite structure d'attelage (28) au moyen d'un axe (32) dirigé vers le haut, et auquel organe support (31) sont liées les barres de liaison (38 ; 39), de sorte que l'organe support (31) puisse pivoter conjointement avec les barres de liaison (38 ; 39), la poutre de liaison (21) et le groupe de fauche (2) par rapport à la structure d'attelage (28) autour dudit axe (32) dirigé vers le haut.

28. Faucheuse selon la revendication 27, caractérisée par le fait qu'en position de transport, le mécanisme de délestage (43) reste opérationnel et crée entre le groupe de fauche (2) et le dispositif d'attelage (3), une liaison élastique.

29. Faucheuse selon la revendication 27 ou 28, caractérisée par le fait que le groupe de fauche (2) est supporté en partie au transport par au moins une roue (51) qui peut être relevée au travail.

30. Faucheuse selon la revendication 29, caractérisée par le fait que la roue (51) est liée à l'extrémité extérieure du groupe de fauche (2) au moyen d'une articulation (53) d'axe (54) dirigé transversalement à la direction de travail (24), que la mise en position de travail et en position de transport de la roue (51) se fait par pivotement autour dudit axe (54), et que la roue (51) est verrouillée en position de transport et en position de travail par un verrou (56).

31. Faucheuse selon l'une des revendications 29 ou 30, caractérisée par le fait qu'en position de travail, la rotation de l'organe support (31) par rapport à la structure d'attelage (28) est condamnée par un verrou (33), et qu'en position de transport, la rotation de l'organe support (31) par rapport à la structure d'attelage (28) est libre.

## Ansprüche

1. Mähmaschine (1) mit einer Mähergruppe (2) und einer Anbauvorrichtung (3) für eine Zugmaschine (4), welche Mähergruppe (2) mehrere Schneidorgane (7, 8, 9) umfaßt, die nebeneinander quer zur Arbeitsrichtung (24) angeordnet sind, welche Mähergruppe (2) außerdem mit der Anbauvorrichtung (3) mittels einer Verbindungseinrichtung (5), umfassend einen Verbindungsbalken (21), mit dem die Mähergruppe (2) über ein Gelenk (22) mit zumindest im wesentlichen in der Arbeitsrichtung (24) ausgerichteter Achse (23), die sich im wesentlichen in der Nähe der durch den Massenmittelpunkt der Mähergruppe (2) gehenden Vertikalebene erstreckt, verbunden ist, wobei die Mähmaschine (1) außerdem einen Entlastungsmechanismus (43) für die Mähergruppe (2) umfaßt, der mit einem elastisch deformierbaren Organ (45 ; 63 ; 68 ; 70) ausgestattet ist, das im Bereich der Verbindung (22 ; 23 ; 25 ; 55) zwischen Verbindungsbalken (21) und Mähergruppe (2) eine aufwärts gerichtete Kraft erzeugt, dadurch gekennzeichnet, daß die Verbindungseinrichtung (5), die die Mähergruppe (2) mit der Anbauvorrichtung (3) verbindet, überdies zwei Verbindungsstangen (38 ; 39) umfaßt, die jeweils einerseits mit dem der Anbauvorrichtung (3) nächstliegenden Ende des Verbindungsbalkens (21) und anderseits mit der Anbauvorrichtung (3) über Gelenke (36 ; 37 ; 40 ; 41) verbunden sind, deren jeweilige Achsen zumindest im wesentlichen in der Arbeitsrichtung (24) derart ausgerichtet sind, daß sie mit der Anbauvorrichtung (3) und dem Verbindungsbalken (21) zumindest im wesentlichen ein verformbares Parallelogramm bilden, wenn die Mähergruppe in einer im wesentlichen horizontalen arbeitsbereiten Lage auf dem Boden ist, und daß das elastisch deformierbare Organ (45 ; 63 ; 68 ; 70) des Entlastungsmechanismus (43) zumindest zwischen zwei Seiten (21 ; 31 ; 38 ; 39) des verformbaren Parallelogramms wirkt.

2. Mähmaschine nach Anspruch 1, dadurch gekennzeichnet, daß sich das elastisch deformierbare Organ (45 ; 63 ; 68 ; 70) zwischen der Anbauvorrichtung (3) und zumindest einer der drei anderen Seiten (21 ; 38 ; 39) des verformbaren Parallelogramms erstreckt.

3. Mähmaschine nach Anspruch 1 oder 2, dadurch gekennzeichnet, daß das elastisch deformierbare Organ (45 ; 63 ; 68 ; 70) mit zumindest einer der Verbindungsstangen (38 ; 39) verbunden ist.

4. Mähmaschine nach Anspruch 3, dadurch gekennzeichnet, daß das elastisch deformierbare Organ (45 ; 63 ; 70) mit der unteren Verbindungsstange (39) verbunden ist.

5. Mähmaschine nach einem der Ansprüche 3 oder 4, dadurch gekennzeichnet, daß die Verbindungsstangen (38 ; 39) in Normalstellung im wesentlichen horizontal sind.

6. Mähmaschine nach Anspruch 3, 4 oder 5, dadurch gekennzeichnet, daß sich die Richtung der vom elastisch deformierbaren Organ (63 ; 68) auf die mit ihm verbundene Verbindungsstange (38 ; 39) ausgeübten Rückstellkraft im wesentlichen parallel zur Verbindungsstange (38 ; 39) erstreckt.

7. Mähmaschine nach Anspruch 6, dadurch gekennzeichnet, daß der Angriffspunkt (67 ; 69) der vom elastisch deformierbaren Organ (63 ; 68) auf die mit ihm verbundene Verbindungsstange (39 ; 38) ausgeübten Rückstellkraft sich auf der Verbindungsstange (39 ; 38) zu einer solchen Stelle erstreckt, daß er keine schädliche Kraft in die Verbindungsstange (39 ; 38) einbringt.

8. Mähmaschine nach Anspruch 7, dadurch gekennzeichnet, daß das elastisch deformierbare Organ (63) mit der unteren Verbindungsstange (39) verbunden ist und daß der Angriffspunkt (67) der Rückstellkraft sich im wesentlichen in die Nähe der Vertikalebene erstreckt, die durch den Anlenkpunkt (41) der Verbindungsstange (39) an der Anbauvorrichtung (3) hindurchgeht.

9. Mähmaschine nach Anspruch 3, 4 oder 5, dadurch gekennzeichnet, daß sich die Richtung der vom elastisch deformierbaren Organ (45 ; 70) auf die mit ihm verbundene Verbindungsstange (39) ausgeübten Rückstellkraft aufwärts erstreckt.

10. Mähmaschine nach Anspruch 9, dadurch gekennzeichnet, daß sich die Richtung der vom elastisch deformierbaren Organ (45 ; 70) auf die mit ihm verbundene Verbindungsstange (39) ausgeübten Rückstellkraft im wesentlichen senkrecht zu der Verbindungsstange (39) erstreckt.

11. Mähmaschine nach einem der Ansprüche 9 oder 10, dadurch gekennzeichnet, daß sich der Verbindungspunkt des elastisch deformierbaren Organs (45 ; 70) auf der Verbindungsstange (39), mit welcher es verbunden ist, in die Nähe der Vertikalebene erstreckt, die durch den Anlenkpunkt (37) der Verbindungsstange (39) am Verbindungsbalken (21) hindurchgeht.

12. Mähmaschine nach Anspruch 11, dadurch gekennzeichnet, daß sich der Verbindungspunkt des elastisch deformierbaren Organs (70) auf der Verbindungsstange (39) in die Vertikalebene erstreckt, die durch den Anlenkpunkt (37) der Verbindungsstange (39) am Verbindungsbalken (21) hindurchgeht.

13. Mähmaschine nach zumindest einem der Ansprüchen 9, 10, 11 oder 12, dadurch gekennzeichnet, daß das elastisch deformierbare Organ (70) unter Zwischenschaltung zumindest eines flexiblen Zugorgans (71), das sich zumindest teilweise um eine mit der Anbauvorrichtung (3) verbundene Führung (72) rollt, eine Rückholkraft auf die Verbindungsstange (39) ausübt, mit der es verbunden ist.

14. Mähmaschine nach Anspruch 13, dadurch gekennzeichnet, daß die Führung (72) eine Rolle ist.

15. Mähmaschine nach einem der Ansprüche 6, 13 oder 14, dadurch gekennzeichnet, daß sich das elastisch deformierbare Organ (63 ; 68 ; 70) im wesentlichen horizontal erstreckt.

16. Mähmaschine nach Anspruch 15, dadurch gekennzeichnet, daß das elastisch deformierbare Organ (63 ; 70) zumindest teilweise innerhalb des von der Anbauvorrichtung (3) eingeschlossenen Raumes untergebracht ist.

17. Mähmaschine nach zumindest einem der vorhergehenden Ansprüche, dadurch gekennzeichnet, daß sich eine Dämpfung (50) zwischen zumindest zwei Seiten des verformbaren Parallelogramms (3 ; 38 ; 39 ; 21) erstreckt.

18. Mähmaschine nach Anspruch 17, dadurch gekennzeichnet, daß sich die Dämpfung (50) zwischen der Anbauvorrichtung (3) und zumindest einer der drei anderen Seiten des verformbaren Parallelogramms erstreckt.

19. Mähmaschine nach Anspruch 18, dadurch gekennzeichnet, daß die Dämpfung (50) mit einer der Verbindungsstangen (38, 39) verbunden ist.

20. Mähmaschine nach Anspruch 19, dadurch gekennzeichnet, daß die Dämpfung (50) mit der unteren Verbindungsstange (39) verbunden ist.

21. Mähmaschine nach Anspruch 19 oder 20, dadurch gekennzeichnet, daß sich die Dämpfung (50) im wesentlichen rechtwinkelig zur Verbindungsstange (38 ; 39), mit welcher sie verbunden ist, erstreckt.

22. Mähmaschine nach Anspruch 21, dadurch gekennzeichnet, daß sich die Verbindungsstelle der Dämpfung (50) mit der mit ihr verbundenen Verbindungsstange (39) in die Nähe der Vertikalebene erstreckt, die durch den Anlenkpunkt (37) der Verbindungsstange (39) am Verbindungsbalken (21) hindurchgeht.

23. Mähmaschine nach Anspruch 22, dadurch gekennzeichnet, daß sich die Verbindungsstelle der Dämpfung (50) mit der Verbindungsstange (39) in die Vertikalebene erstreckt, die durch den Anlenkpunkt (37) der Verbindungsstange (39) am Verbindungsbalken (21) hindurchgeht.

24. Mähmaschine nach zumindest einem der vorhergehenden Ansprüche, dadurch gekennzeichnet, daß eine der Verbindungsstangen (38, 39) eine variable Länge hat.

25. Mähmaschine nach Anspruch 24, dadurch gekennzeichnet, daß die Länge der oberen Verbindungsstange (38) variabel ist.

26. Mähmaschine nach Anspruch 24 oder 25, dadurch gekennzeichnet, daß die Verbindungsstange (38), die eine variable Länge hat, aus einem aus- und rückziehbaren Organ, z.B. einem Hydraulikzylinder (61) besteht.

27. Mähmaschine nach zumindest einem der vorhergehenden Ansprüche, dadurch gekennzeichnet, daß die Anbauvorrichtung (3) eine Anbaukonstruktion (28) und ein Stützorgan (31) umfaßt, das mit der Anbaukonstruktion (28) über eine aufrechtstehende Achse (32) verbunden ist und mit welchem Stützorgan (31) die Verbindungsstangen (38 ; 39) derart verbunden sind, daß das Stützorgan (31) gemeinsam mit den Verbindungsstangen (38 ; 39), dem Verbindungsbalken (21) und der Mähergruppe (2) in bezug auf die Anbaukonstruktion (28) um die aufrechtstehende Achse (32) schwenken kann.

28. Mähmaschine nach Anspruch 27, dadurch gekennzeichnet, daß der Entlastungsmechanismus (43) in der Transportstellung in Tätigkeit bleibt und zwischen der Mähergruppe (2) und der Anbauvorrichtung (3) eine elastische Verbindung bewirkt.

29. Mähmaschine nach Anspruch 27 oder 28, dadurch gekennzeichnet, daß die Mähergruppe (2) während des Transports teilweise durch zumindest ein Rad (51), das im Betrieb angehoben werden kann, abgestützt ist.

30. Mähmaschine nach Anspruch 29, dadurch gekennzeichnet, daß das Rad (51) mit dem äußeren Ende der Mähergruppe (2) über ein Gelenk (53) mit quer zur Arbeitsrichtung (24) gerichteter Achse (54) verbunden ist, daß das Rad (51) durch Verschwenken um die Achse (54) in Arbeitsstellung und in Transportstellung gebracht wird und daß das Rad (51) in Transportstellung und in Arbeitsstellung durch einen Bolzen (56) verriegelt wird.

31. Mähmaschine nach einem der Ansprüche 29 oder 30, dadurch gekennzeichnet, daß die Drehung des Stützorgans (31) in bezug auf die Anbaukonstruktion (28) in der Arbeitsstellung durch einen Bolzen (33) gesperrt ist und daß die Drehung des Stützorgans (31) in bezug auf die Anbaukonstruktion (28) in der Transportstellung frei ist.

## Claims

1. A mower (1) comprising a mower set (2) and a device (3) for coupling to a tractor vehicle (4), where the said mower set (2) comprises a plurality of cutting members (7, 8, 9) arranged side-by-side transversely to the direction of work (24), where the said mower set (2) is moreover connected to the said coupling device (3) by means of a connecting device (5) comprising a connecting beam (21), to which the mower set (2) is connected by means of a joint (22) having an axis (23) extending at least substantially in the direction of work (24) and extending substantially in the vicinity of the vertical plane passing through the centre of gravity of the said mower set (2), where the said mower (1) also comprises a mechanism (43) for relieving the load on the mower set (2), which mechanism is equipped with an elastically-deformable member (45 ; 63 ; 68 ; 70) which, at the level of the connection (22 ; 23 ; 25 ; 55) between the connecting beam (21) and the mower set (2), creates an upwardly-directed force, characterised in that the connecting device (5) which connects the mower set (2) to the coupling device (3) also comprises two connecting bars (38 ; 39) which are each connected on the one hand to that end of the said connecting beam (21) closest to the coupling device (3) and on the other hand to the coupling device (3) by means of joints (36 ; 37 ; 40 ; 41) whose respective axes extend at least substantially in the direction of work (24) in such manner that, when the mower set is in a suitable position for working on substantially horizontal ground, they at least substantially form a deformable parallelogram with the coupling device (3) and the connecting beam (21), and that the elastically-deformable member (45 ; 63 ; 68 ; 70) of the load-relieving mechanism (43) operates at least between two sides (21 ; 31 ; 38 ; 39) of the said deformable parallelogram.

2. A mower as claimed in claim 1, characterised in that the elastically deformable member (45 ; 63 ; 68 ; 70) extends between the coupling device (3) and a least one of the three other sides (21 ; 38 ; 39) of the deformable parallelogram.

3. A mower as claimed in claim 1 or claim 2, characterised in that the elastically deformable member (45 ; 63 ; 68 ; 70) is connected to at least one of the connecting bars (38 ; 39).

4. A mower as claimed in claim 3, characterised in that the elastically deformable member (45 ; 63 ; 70) is connected to the lower connecting bar (39).

5. A mower as claimed in one of claims 3 or 4, characterised in that the connecting bars (38 ; 39) are substantially horizontal in their normal position.

6. A mower as claimed in claim 3, 4 or 5, characterised in that the direction of the restoring force exerted by the elastically deformable member (63 ; 68) upon the connecting bar (38 ; 39) to which it is connected extends substantially in parallel to the said connecting bar (38 ; 39).

7. A mower as claimed in claim 6, characterised in that the point of application (67 ; 69) of the restoring force exerted by the elastically deformable member (63 ; 68) upon the connecting bar (39 ; 38) to which it is connected extends along the connecting bar (39 ; 38) at a location such that it introduces no detrimental force into the said connecting bar (39 ; 38).

8. A mower as claimed in claim 7, characterised in that the elastically deformable member (63) is connected to the lower connecting bar (39), and the point of application (67) of the restoring force extends substantially in the vicinity of the vertical plane passing through the articulation point (41) of the connecting bar (39) to the coupling device (3).

9. A mower as claimed in claim 3, 4 or 5, characterised in that the direction of the restoring force exerted by the elastically deformable member (45 ; 70) upon the connecting bar (39) to which it is connected extends upwards.

10. A mower as claimed in claim 9, characterised in that the direction of the restoring force exerted by the elastically deformable member (45 ; 70) upon the connecting bar (39) to which it is connected extends substantially perpendicularly to the said connecting bar (39).

11. A mower as claimed in one of claims 9 or 10, characterised in that the connection point of the elastically deformable member (45 ; 70) to the connecting bar (39) to which it is connected extends in the vicinity of the vertical plane passing through the articulation point (37) of the said connecting bar (39) to the connecting beam (39).

12. A mower as claimed in claim 11, characterised in that the connection point of the elastically deformable member (70) to the connecting bar (39) extends in the vertical plane passing through the articulation point (37) of the said connecting bar (39) to the connecting beam (21).

13. A mower as claimed in at least one of claims 9, 10, 11 or 12, characterised in that the elastically deformable member (70) exerts a restoring force upon the connecting bar (39) to which it is connected, by means of at least one flexible traction member (71) which is wound, at least partially, on a guide (72) connected to the coupling device (3).

14. A mower as claimed in claim 13, characterised in that the guide (72) is a wheel.

15. A mower as claimed in one of claims 6, 13 or 14, characterised in that the elastically deformable member (63 ; 68 ; 70) extends substantially horizontally.

16. A mower as claimed in claim 15, characterised in that the elastically deformable member (63 ;

70) is housed at least partially inside the space occupied by the coupling device (3).

17. A mower as claimed in at least one of the preceding claims, characterised in that a damping device (50) extends at least between two sides of the deformable parallelogram (3 ; 38 ; 39 ; 21).

18. A mower as claimed in claim 17, characterised in that the damping device (50) extends between the coupling device (3) and at least one of the three other sides of the deformable parallelogram.

19. A mower as claimed in claim 18, characterised in that the damping device (50) is connected to one of the connecting bars (38 ; 39).

20. A mower as claimed in claim 19, characterised in that the damping device (50) is connected to the lower connecting bar (39).

21. A mower as claimed in claim 19 or claim 20, characterised in that the damping device (50) extends substantially perpendicularly to the connecting bar (38 ; 39) to which it is connected.

22. A mower as claimed in claim 21, characterised in that the connection point of the damping device (50) to the connecting bar (39) to which it is connected extends in the vicinity of the vertical plane passing through the articulation point (37) of the said connecting bar (39) to the connecting beam (21).

23. A mower as claimed in claim 22, characterised in that the connection point of the damping device (50) to the connecting bar (39) extends in the vertical plane passing through the articulation point (37) of the said connecting bar (39) to the connecting beam (21).

24. A mower as claimed in at least one of the preceding claims, characterised in that one (38) of the connecting bars (38 ; 39) is of variable length.

25. A mower as claimed in claim 24, characterised in that the length of the upper connecting bar (38) is variable.

26. A mower as claimed in claim 24 or claim 25, characterised in that the connecting bar (38), which has a variable length, is formed by an extendible and retractable member, such as a hydraulic jack (61), for example.

27. A mower as claimed in at least one of the preceding claims, characterised in that the coupling device (3) comprises a coupling structure (28) and a support member (31) which is connected to the said coupling structure (28) by means of an upwardly directed shaft (32), connecting bars (38 ; 39) being connected to the said support member (31) in such manner that the support member (31) can pivot, together with the connecting bars (38 ; 39), the connecting beam (21) and the mower set (2), with respect to the coupling structure (28) about the said upwardly directed shaft (32).

28. A mower as claimed in claim 27, characterised in that in the transport position the load-relieving mechanism (43) remains in operational and creates an elastic connection between the mower set (2) and the coupling device (3).

29. A mower as claimed in claim 27 or claim 28, characterised in that during transport the mower set (2) is partially supported by at least one wheel (51) which can be raised during work.

30. A mower as claimed in claim 29, characterised in that the wheel (51) is connected to the outer end of the mower set (2) by means of a joint (53) having an axis (54) extending transversely to the direction of work (24), that the wheel (51) is brought into the working position and the transport position by being pivoted about the said axis (54), and that the wheel (51) is bolted in the transport position and the working position by means of a bolt (56).

31. A mower as claimed in one of claims 29 or 30, characterised in that in the working position the rotation of the support member (31) with respect to the coupling structure (28) is blocked by a bolt (33), and that in the transport position the rotation of the support member (31) with respect to the coupling structure (28) is free-running.

FIG.1

FIG.2

EP 0 211 785 B1

FIG.3

EP 0 211 785 B1

FIG.4

EP 0 211 785 B1

FIG.5

FIG.6

FIG.7

## FIG.8

## FIG.9

## FIG.10